# EUROPEAN PATENT APPLICATION

(11) **EP 4 043 912 A1**
(43) Date of publication of application: **17.08.2022**
(21) Application number: 22275008.5
(22) Date of filing: 19.01.2022
(51) Int. Cl.: G01S 7/40, G01S 7/497, G01S 7/52

(54) **METHOD AND APPARATUS FOR TESTING SENSING EFFECT, MOVING APPARATUS, ELECTRONIC DEVICE, STORAGE MEDIUM, COMPUTER PROGRAM PRODUCT, AND SYSTEM FOR TESTING SENSING EFFECT**

(30) Priority: 18.06.2021 CN 202110683960
(71) Applicant: Apollo Intelligent Driving Technology (Beijing) Co., Ltd., Haidian District Beijing 100085 (CN)
(72) Inventor: XING, Liang, Beijing, 100085 (CN); SONG, Shuqing, Beijing, 100085 (CN); WU, Yi, Beijing, 100085 (CN); YANG, Wentao, Beijing, 100085 (CN); ZHAO, Shuaishuai, Beijing, 100085 (CN); LUO, Qionghua, Beijing, 100085 (CN); WANG, Lifeng, Beijing, 100085 (CN); FENG, Yunchan, Beijing, 100085 (CN); WANG, Tao, Beijing, 100085 (CN); CAO, Xiaochen, Beijing, 100085 (CN); WU, Fuchuang, Beijing, 100085 (CN)
(74) Representative: Wilson Gunn

(57) **Abstract**

The present disclosure provides a method and apparatus for testing a sensing effect, a moving apparatus, an electronic device, a storage medium, a computer program product and a system for testing a sensing effect, and relates to the field of intelligent vehicles. The method includes: controlling a moving apparatus to move within a preset range of a vehicle in accordance with a preset route, wherein the moving apparatus carries at least one type of sensing target, and a sensing device to be tested is installed on the vehicle; generating true reference data according to movement data of the movement apparatus and sensing target information on the sensing target; acquiring sensing result data of the sensing target, generated by the sensing device to be tested; and testing the sensing effect of the sensing device to be tested according to the true reference data and the sensing result data.

## Description

### TECHNICAL FIELD

The present disclosure relates to the field of computer technologies, and in particular to the field of intelligent vehicles.

### BACKGROUND

In the prior art, most of methods for testing a sensing system of a vehicle are manual testing, that is, moving a sensing target several times in a sensing range and comparing sensing results. This not only needs to consume labor and time costs, but also has very low test accuracy and efficiency.

### SUMMARY

The present disclosure provides a method and apparatus for testing a sensing effect, a device, a storage medium, a computer program product and a system for testing a sensing effect.

According to a first aspect of the present disclosure, there is provided a method for testing a sensing effect, including:
controlling a moving apparatus to move within a preset range of a vehicle in accordance with a preset route, wherein the moving apparatus carries at least one type of sensing target, and a sensing device to be tested is installed on the vehicle;
generating true reference data according to movement data of the moving apparatus and sensing target information of the sensing target;
acquiring sensing result data of the sensing target, generated by the sensing device to be tested; and
testing the sensing effect of the sensing device to be tested according to the true reference data and the sensing result data.

According to a second aspect of the present disclosure, there is provided an apparatus for testing a sensing effect, including:
a movement control module, configured for controlling a moving apparatus to move within a preset range of a vehicle in accordance with a preset route, wherein the moving apparatus carries at least one type of sensing target, and a sensing device to be tested is installed on the vehicle;
a true reference data generation module, configured for generating true reference data according to movement data of the moving apparatus and sensing target information of the sensing target;
a sensing result data acquisition module, configured for acquiring sensing result data of the sensing target, generated by the sensing device to be tested; and
a testing module, configured for testing the sensing effect of the sensing device to be tested according to the true reference data and the sensing result data.

According to a third aspect of the present disclosure, there is provided an electronic device, including:
at least one processor; and
a memory communicatively connected with the at least one processor,
wherein the memory stores instructions executable by the at least one processor, and the instructions, when executed by the at least one processor, enable the at least one processor to perform the method provided by any embodiment of the present disclosure.

According to a fourth aspect of the present disclosure, there is provided a non-transitory computer-readable storage medium storing computer instructions, wherein the computer instructions, when executed by a computer, cause the computer to perform the method provided by any embodiment of the present disclosure.

According to a fifth aspect of the present disclosure, there is provided a computer program product including a computer program, wherein the computer program, when executed by a processor, implements the method provided by any embodiment of the present disclosure.

According to a sixth aspect of the present disclosure, there is provided a system for testing a sensing effect, including the apparatus for testing a sensing effect, the moving apparatus, and a vehicle on which the sensing device to be tested is installed, provided by any embodiment of the present disclosure.

The technical solutions of the embodiments of the present disclosure can quickly verify the sensing effect of a vehicle installed with a sensing device, and identify quality problems.

It should be understood that the content described in this section is neither intended to limit the key or important features of the embodiments of the present disclosure, nor intended to limit the scope of the present disclosure. Other features of the present disclosure will be readily understood through the following description.

### BRIEF DESCRIPTION OF THE DRAWINGS

The drawings are used to better understand the solution and do not constitute a limitation to the present disclosure. In the drawings:
FIG. 1 is a flowchart of a method for testing a sensing effect according to an embodiment of the present disclosure;
FIG. 2 is a schematic diagram of an application scene according to an embodiment of the present disclosure;
FIG. 3 is a block diagram of an apparatus for testing a sensing effect according to an embodiment of the present disclosure;
FIG. 4 is a block diagram of an apparatus for testing a sensing effect according to one implementation of an embodiment of the present disclosure; and
FIG. 5 is a block diagram of an electronic device configured for implementing the method according to an embodiment of the present disclosure.

### DETAILED DESCRIPTION

Exemplary embodiments of the present disclosure are described below in combination with the drawings, including various details of the embodiments of the present disclosure to facilitate understanding, which should be considered as exemplary only. Thus, those of ordinary skill in the art should realize that various changes and modifications can be made to the embodiments described here without departing from the scope and spirit of the present disclosure. Likewise, descriptions of well-known functions and structures are omitted in the following description for clarity and conciseness:

An embodiment of the present disclosure provides a moving apparatus, including a carrying mechanism, a moving mechanism and a positioning mechanism.

The carrying mechanism can be configured for carrying at least one type of sensing target, such as a cone, a dummy, a fake vehicle, etc. The sensing target has sensing target information, such as size, shape, etc. By measuring the length, width and height of the sensing target, the sensing target information of the sensing target can be obtained.

The moving mechanism can be configured for driving the moving apparatus to move within a preset range of a vehicle in accordance with a preset route. Illustratively, the carrying mechanism may be configured as a platform, and the moving mechanism may include wheels and motors disposed below the platform. In an example, the moving apparatus may include a controller, configured for communicating with an external device, further controlling the motor to drive the wheels according to a control signal of the external device, and further driving the moving apparatus to move within the preset range of the vehicle in accordance with the preset route.

The positioning mechanism can collect in real time or calculate movement data of the moving apparatus, such as a position, an orientation, a speed and an acceleration, etc.

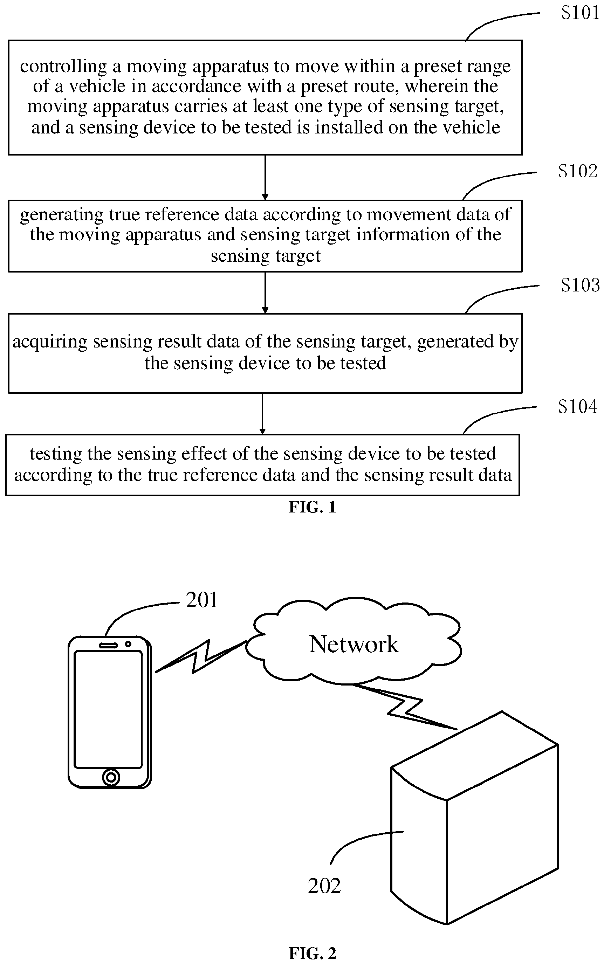

An embodiment of the present disclosure also provides a method for testing a sensing effect, as shown in FIG. 1. The method includes:
S101, controlling a moving apparatus to move within a preset range of a vehicle in accordance with a preset route, wherein the moving apparatus carries at least one type of sensing target, and a sensing device to be tested is installed on the vehicle;
S102, generating true reference data according to movement data of the moving apparatus and sensing target information of the sensing target;
S103, acquiring sensing result data of the sensing target, generated by the sensing device to be tested; and
S104, testing the sensing effect of the sensing device to be tested according to the true reference data and the sensing result data.

The sensing device includes, but is not limited to, a camera, a radar, an ultrasonic transceiver and other sensor for sensing a target. Illustratively, the vehicle includes, but is not limited to, autonomous vehicles and intelligent teaching vehicles.

The preset range can be set according to the type and sensing range of the sensing device to be tested, and the preset route can be set according to the preset range. For example, the moving area in which the moving apparatus moves in accordance with the preset route can cover the preset range. The type and number of sensing targets carried on the moving apparatus can be set according to a test environment, and will not be limited in this embodiment.

The moving apparatus moves in the preset range of the vehicle in accordance with the preset route. By acquiring moving data of the moving apparatus, true reference data for testing the sensing effect can be obtained. By comparing the true reference data with the sensing result data of the sensing target generated by the sensing device to be tested, the test result of the sensing effect can be obtained.

In one implementation, the true reference data includes a true position, a true orientation, a true speed, a true acceleration, a true size and a true shape of the sensing target. The sensing result data includes a sensing position, a sensing orientation, a sensing speed, a sensing acceleration, a sensing size and a sensing shape of the sensing target, generated by the sensing device to be tested.

By comparing the true position with the sensing position, comparing the true orientation with the sensing orientation, comparing the true speed with the sensing speed, comparing the true acceleration with the sensing acceleration, comparing the true size with the sensing size, and comparing the true shape with the sensing shape, respectively, the sensing effect of the sensing device to be tested can be accurately tested from a plurality of dimensions.

In one implementation, the S102 may include: acquiring the true position, the true orientation, the true speed and the true acceleration of the sensing target based on a positioning mechanism on the moving apparatus.

Illustratively, based on the positioning mechanism, the true position and the true orientation of the sensing target can be acquired in real time, and then the true speed and the true acceleration can be calculated. The true size and the true shape of the sensing target can be obtained by measuring the sensing target. Thus, all true reference information of the sensing target can be obtained conveniently and quickly in real time.

In one implementation, the true reference data are a plurality of true reference information including time identifications, the sensing result data are a plurality of sensing information including time identifications, and the S104 may include: comparing the true reference information and the sensing information with a same time identification.

That is, the true reference data and the sensing result data can be continuous data distributed at a preset time interval. Illustratively, both the true reference data and the sensing result data can be output at a frequency of 100 Hz or higher, so as to obtain a plurality of continuous true reference information including time identifications and a plurality of continuous sensing information including time identifications, respectively. By continuously comparing the true reference information and the sensing information output at each node (time identification), it is possible to obtain the test result at each node, such as pass or fail, that is, a plurality of continuous test results including time identifications. By summarizing the sensing results at all nodes in accordance with a preset test standard, the test result of the sensing effect of the sensing device to be tested can be obtained.

In one implementation, the S102 may include: collecting the movement data at a preset time interval; and generating the plurality of true reference information comprising the time identifications based on the collected movement data and the sensing target information.

For example, based on the positioning mechanism, the moving apparatus can output the movement data such as the true position, the true orientation, the true speed and the true acceleration at the frequency of 100 Hz or higher. Furthermore, in combination with the sensing target information, such as the true size and the true shape, a plurality of continuous true reference information including time identifications, that is, the true position, the true orientation, the true speed, the true acceleration, the true size and the true shape, can be quickly obtained in real time.

For each node (time identification), by comparing the true position with the sensing position, comparing the true orientation with the sensing orientation, comparing the true speed with the sensing speed, comparing the true acceleration with the sensing acceleration, comparing the true size with the sensing size, and comparing the true shape with the sensing shape, respectively, a plurality of continuous test results including time identifications can be obtained.

FIG. 2 is a schematic diagram of an application scene according to an embodiment of the present disclosure. As shown in FIG. 2, a terminal 201 can be a hardware, such as a mobile phone, a tablet, a vehicle-mounted terminal, a portable computer and other electronic device with a display screen. In a case where the terminal 201 is a software or Application (APP), it can be installed in the above electronic device. A server 202 can provide various services, for example, providing support for the APP installed on the terminal 201. The method provided by the embodiment of the present disclosure can be performed by the server 202, and can also be performed by the terminal 201. The respective apparatus corresponding to the method can be disposed in the terminal 201, and can also be disposed in the server 202. Herein, any number of terminals, networks and servers can be configured to meet the needs.

According to the method for testing a sensing effect of the embodiment of the present disclosure, by controlling the moving mechanism to move within the preset range of the vehicle in accordance with the preset route, the true reference data can be obtained; and then by comparing the true reference data with the sensing result data generated by the sensing device on the vehicle, the sensing effect of the vehicle installed with the intelligent sensing device can be quickly verified, and quality problems can be quickly identified. Meanwhile, it can also be used as a test tool in daily technology research and development.

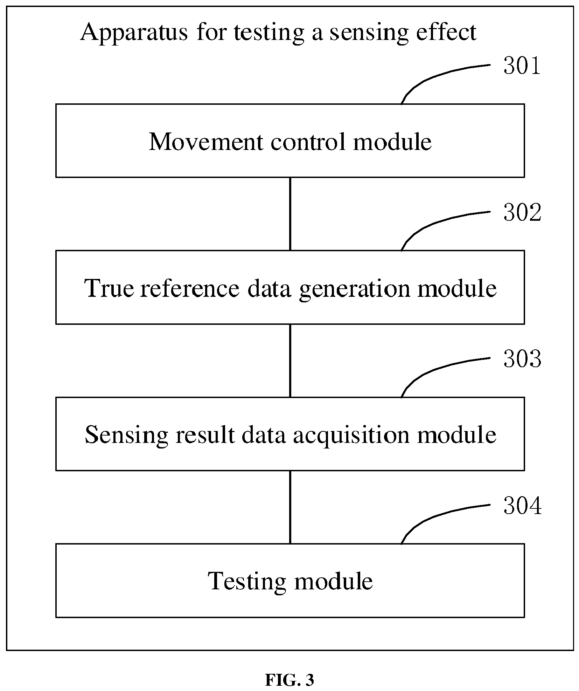

FIG. 3 shows a block diagram of an apparatus for testing a sensing effect according to an embodiment of the present disclosure. As shown in FIG. 3, the apparatus includes:
a movement control module 301, configured for controlling a moving apparatus to move within a preset range of a vehicle in accordance with a preset route, wherein the moving apparatus carries at least one type of sensing target, and a sensing device to be tested is installed on the vehicle;
a true reference data generation module 302, configured for generating true reference data according to movement data of the moving apparatus and sensing target information of the sensing target;
a sensing result data acquisition module 303, configured for acquiring sensing result data of the sensing target, generated by the sensing device to be tested; and
a testing module 304, configured for testing the sensing effect of the sensing device to be tested according to the true reference data and the sensing result data.

In one implementation, the true reference data includes a true position, a true orientation, a true speed, a true acceleration, a true size and a true shape of the sensing target, and the sensing result data includes a sensing position, a sensing orientation, a sensing speed, a sensing acceleration, a sensing size and a sensing shape of the sensing target, generated by the sensing device to be tested.

In one implementation, the true reference data generation module is further configured for acquiring the true position, the true orientation, the true speed and the true acceleration of the sensing target based on a positioning mechanism on the moving apparatus.

In one implementation, the true reference data are a plurality of true reference information including time identifications, and the sensing result data are a plurality of sensing information including time identifications. The test module 304 is further configured for comparing the true reference information and the sensing information with a same time identification.

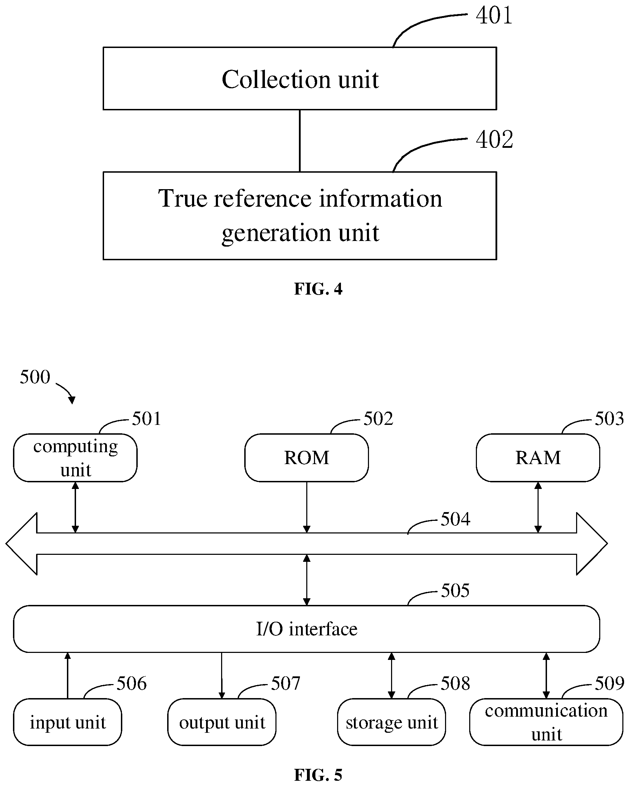

In one implementation, as shown in FIG. 4, the true reference data generation module 302 includes:
a collection unit 401, configured for collecting the movement data at a preset time interval; and
a true reference information generation unit 402, configured for generating the plurality of true reference information including the time identifications based on the collected movement data and the sensing target information.

The functions of the respective modules in the respective apparatuses of the embodiments of the present disclosure may refer to the corresponding descriptions in the above methods, and will not be described in detail herein.

According to embodiments of the present disclosure, the present disclosure also provides an electronic device, a readable storage medium and a computer program product.

FIG. 5 shows a schematic block diagram of an example electronic device 500 that may be configured for implementing the embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the present disclosure described and/or claimed herein.

As shown in FIG. 5, the electronic device 500 includes a computing unit 501 that may perform various suitable actions and processes in accordance with computer programs stored in a read only memory (ROM) 502 or computer programs loaded from a storage unit 508 into a random access memory (RAM) 503. In the RAM 503, various programs and data required for the operation of the electronic device 500 may also be stored. The computing unit 501, the ROM 502 and the RAM 503 are connected to each other through a bus 504. An input/output (I/O) interface 505 is also connected to the bus 504.

A plurality of components in the electronic device 500 are connected to the I/O interface 505, including: an input unit 506, such as a keyboard, a mouse, etc.; an output unit 507, such as various types of displays, speakers, etc.; a storage unit 508, such as a magnetic disk, an optical disk, etc.; and a communication unit 509, such as a network card, a modem, a wireless communication transceiver, etc. The communication unit 509 allows the electronic device 500 to exchange information/data with other devices over a computer network, such as the Internet, and/or various telecommunications networks.

The computing unit 501 may be various general purpose and/or special purpose processing assemblies having processing and computing capabilities. Some examples of the computing unit 501 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 501 performs various methods and processes described above. For example, in some embodiments, the method for testing a sensing effect may be implemented as computer software programs that are physically contained in a machine-readable medium, such as the storage unit 508. In some embodiments, some or all of the computer programs may be loaded into and/or installed on the electronic device 500 via the ROM 502 and/or the communication unit 509. In a case where the computer programs are loaded into the RAM 503 and executed by the computing unit 501, one or more of steps of the above method for testing a sensing effect may be performed. Alternatively, in other embodiments, the computing unit 501 may be configured to perform the method for testing a sensing effect in any other suitable manner (e.g., by means of a firmware).

Various embodiments of the systems and techniques described herein above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

The program codes for implementing the methods of the present disclosure may be written in any combination of one or more programming languages. These program codes may be provided to a processor or controller of a general purpose computer, a special purpose computer, or other programmable data processing apparatus such that the program codes, when executed by the processor or controller, enable the functions/operations specified in the flowchart and/or the block diagram to be performed. The program codes may be executed entirely on a machine, partly on a machine, partly on a machine as a stand-alone software package and partly on a remote machine, or entirely on a remote machine or server.

In the context of the present disclosure, the machine-readable medium may be a tangible medium that may contain or store programs for using by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include one or more wire-based electrical connection, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

In order to provide an interaction with a user, the system and technology described here may be implemented on a computer having: a display device (e.g., a cathode ray tube (CRT) or a liquid crystal display (LCD) monitor) for displaying information to the user; and a keyboard and a pointing device (e.g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other. The server may be a cloud server, and may also be a server of a distributed system, or a server incorporating a blockchain.

It should be understood that the steps can be reordered, added or deleted using the various flows illustrated above. For example, the steps described in the present disclosure may be performed concurrently, sequentially or in a different order, so long as the desired results of the technical solutions disclosed in the present disclosure can be achieved, and there is no limitation herein.

The above-described specific embodiments do not limit the scope of the present disclosure. It will be apparent to those skilled in the art that various modifications, combinations, sub-combinations and substitutions are possible, depending on design requirements and other factors. Any modifications, equivalent substitutions, and improvements within the spirit and principles of the present disclosure are intended to be included within the scope of the present disclosure.

## Claims

1. A method for testing a sensing effect, comprising:
controlling (S101) a moving apparatus to move within a preset range of a vehicle in accordance with a preset route, wherein the moving apparatus carries at least one type of sensing target, and a sensing device to be tested is installed on the vehicle;
generating (S102) true reference data according to movement data of the moving apparatus and sensing target information of the sensing target;
acquiring (S103) sensing result data of the sensing target, generated by the sensing device to be tested; and
testing (S104) the sensing effect of the sensing device to be tested according to the true reference data and the sensing result data.

2. The method of claim 1, wherein the true reference data comprises a true position, a true orientation, a true speed, a true acceleration, a true size and a true shape of the sensing target, and the sensing result data comprises a sensing position, a sensing orientation, a sensing speed, a sensing acceleration, a sensing size and a sensing shape of the sensing target, generated by the sensing device to be tested.

3. The method of claim 2, wherein the generating (S102) the true reference data according to the movement data of the moving apparatus and the sensing target information of the sensing target, comprises:
acquiring the true position, the true orientation, the true speed and the true acceleration of the sensing target based on a positioning mechanism on the moving apparatus.

4. The method of any one of claims 1 to 3, wherein the true reference data are a plurality of true reference information comprising time identifications, the sensing result data are a plurality of sensing information comprising time identifications, and the testing (S104) the sensing effect of the sensing device to be tested according to the true reference data and the sensing result data, comprises:
comparing the true reference information and the sensing information with a same time identification.

5. The method of claim 4, wherein the generating (S102) the true reference data according to the movement data of the moving apparatus and the sensing target information of the sensing target, comprises:
collecting the movement data at a preset time interval; and
generating the plurality of true reference information comprising the time identifications based on the collected movement data and the sensing target information.

6. An apparatus for testing a sensing effect, comprising:
a movement control module (301), configured for controlling a moving apparatus to move within a preset range of a vehicle in accordance with a preset route, wherein the moving apparatus carries at least one type of sensing target, and a sensing device to be tested is installed on the vehicle;
a true reference data generation module (302), configured for generating true reference data according to movement data of the moving apparatus and sensing target information of the sensing target;
a sensing result data acquisition module (303), configured for acquiring sensing result data of the sensing target, generated by the sensing device to be tested; and
a testing module (304), configured for testing the sensing effect of the sensing device to be tested according to the true reference data and the sensing result data.

7. The apparatus of claim 6, wherein the true reference data comprises a true position, a true orientation, a true speed, a true acceleration, a true size and a true shape of the sensing target, and the sensing result data comprises a sensing position, a sensing orientation, a sensing speed, a sensing acceleration, a sensing size and a sensing shape of the sensing target, generated by the sensing device to be tested.

8. The apparatus of claim 6 or 7, wherein the true reference data generation module (302) is further configured for acquiring the true position, the true orientation, the true speed and the true acceleration of the sensing target based on a positioning mechanism on the moving apparatus.

9. The apparatus of any one of claims 6 to 8, wherein the true reference data are a plurality of true reference information comprising time identifications, and the sensing result data are a plurality of sensing information comprising time identifications, and the test module (304) is further configured for comparing the true reference information and the sensing information with a same time identification.

10. The apparatus of claim 9, wherein the true reference data generation module (302) comprises:
a collection unit (401), configured for collecting the movement data at a preset time interval; and
a true reference information generation unit (402), configured for generating the plurality of true reference information comprising the time identifications based on the collected movement data and the sensing target information.

11. A moving apparatus, comprising:
a carrying mechanism, configured for carrying at least one type of sensing target;
a moving mechanism, configured for driving the moving apparatus to move within a preset range of a vehicle in accordance with a preset route; and
a positioning mechanism, configured for collecting movement data of the moving apparatus.

12. An electronic device, comprising:
at least one processor; and
a memory communicatively connected with the at least one processor,
wherein the memory stores instructions executable by the at least one processor, and the instructions, when executed by the at least one processor, enable the at least one processor to perform the method of any one of claims 1 to 5.

13. A non-transitory computer readable storage medium storing computer instructions, wherein the computer instructions, when executed by a computer, cause the computer to perform the method of any one of claims 1 to 5.

14. A computer program product comprising a computer program, wherein the computer program, when executed by a processor, implements the method of any one of claims 1 to 5.

15. A system for testing a sensing effect, comprising:
the apparatus for testing a sensing effect of any one of claims 6 to 10;
the moving apparatus of claim 11; and
a vehicle on which the sensing device to be tested is installed.
